# DEMANDE DE BREVET EUROPEEN

(11) **EP 4 148 103 A1**
(43) Date de publication de la demande: **15.03.2023**
(21) Numéro de dépôt: 21306253.2
(22) Date de dépôt: 13.09.2021
(51) Int. Cl.: C10G 2/00, C10G 3/00, C10L 1/08, C10G 65/14, C10L 1/04

(54) **COMPOSITION RENOUVELABLE DE CARBUREACTEUR**

(71) Demandeur: TotalEnergies OneTech, 92400 Courbevoie (FR)
(72) Inventeur: PICARD, Florent, 69360 Solaize (FR); CHAVAIN, France, 76700 Rogerville (FR); GUERET, Christophe, 69360 Solaize (FR)
(74) Mandataire: Fédit-Loriot

(57) **Abrégé**

L'invention concerne une composition de carburéacteur issue de charges renouvelables comprenant de 70% à 95% en masse d'au moins une base paraffinique issue d'un hydrotraitement d'esters et d'acides gras ou d'un procédé Fischer-Tropsch et comprenant au moins 90% en masse de paraffines et de 5 à 30% en masse d'au moins une base aromatique en C8-C16 caractérisée en ce que ladite base aromatique correspond à la fraction C8-C16 d'un biocarburant en C6-C20 produit par un procédé de conversion en carburant d'au moins un bioalcool en C2 et caractérisée en ce que ladite base aromatique contient au moins 60% en masse de composés aromatiques lesdits composés aromatiques comprenant au moins 50% en masse de benzène substitué par au moins n alkyle en C2-C5, n étant un entier de 1 à 3. La composition finale de carburéacteur comprend moins de 9,5% en masse de cycloalcanes en C6-C16.

## Description

### Domaine technique

La présente invention concerne le domaine des carburéacteurs et en particulier un carburéacteur issu de charges renouvelables.

### Contexte de l'invention

Le carburant conventionnel de type carburéacteur est produit à partir de pétrole brut et contient un mélange complexe d'hydrocarbures qui ont typiquement 6 à 18 atomes de carbone. Ces hydrocarbures comprennent des alcanes linéaires et ramifiés, des cycloalcanes et des hydrocarbures aromatiques. En raison de la charge d'origine pétrolière et des procédés de production, le carburant conventionnel de type carburéacteur, appelé également jet, contient typiquement jusqu'à 25 % en masse d'hydrocarbures aromatiques, plus généralement 10% à 25% en masse d'hydrocarbures aromatiques. Une proportion significative, habituellement de l'ordre de moins de 5 % d'hydrocarbures aromatiques, sont polycycliques (c'est-à-dire qu'ils contiennent deux ou plusieurs cycles aromatiques) et généralement de type naphtalènes. De tels composés sont nocifs pour la santé (par exemple cancérigènes) et ont de mauvaises propriétés de combustion.

Les contraintes environnementales, économiques et énergétiques ont encouragé la diversification des ressources énergétiques et le développement de nouveaux carburants en particulier dans le domaine de l'aviation.

Les carburants renouvelables dérivés de la matière biologique sont une alternative aux combustibles fossiles conventionnels. Les jets conventionnels peuvent être mélangés à des bases paraffiniques issues de charges renouvelables telles que prévues par la norme D7566-21 permettant ainsi la production de carburants d'aviation alternatifs. Les bases pour carburant d'aviation issues de charges renouvelables pouvant être incorporées à du jet fossile sont :
- Les kérosènes paraffiniques synthétiques [SPK], issus de procédés tels que le procédé Fischer-Tropsch, l'hydrotraitement d'esters et d'acides gras [HEFA-SPK] ou produit par la voie Alcohol-to-jet (transformation d'alcool en kérosène) [ATJ-SPK]
- Les isoparaffines synthétiques produites par hydrotraitement à partir de sucres fermentés [SIP-HFS]
- Les kérosènes aromatiques synthétiques obtenus par alkylation d'aromatiques légers de source non-pétrolière [SPK/A]
- Les kérosènes de synthèse obtenus à partir de la conversion hydrothermique d'esters d'acide gras et d'acide gras.
- Les kérosènes paraffiniques synthétiques [SPK] obtenus à partir d'hydrocarbures, d'esters et d'acides gras hydrotraités.

Actuellement, ces bases de carburant d'aviation renouvelables ne peuvent pour la plupart être utilisées seules en raison de leur composition très éloignée des jets fossiles qui posent notamment des problèmes de compatibilité avec les matériaux des éléments avec lesquels le carburant est en contact. Sur ce point, l'absence de composés aromatiques dans la majorité des bases de carburant d'aviation renouvelables disponibles peut engendrer des problèmes de compatibilité avec les matériaux, et en particulier certains joints.

En effet une teneur minimale en composés aromatiques dans les carburéacteurs est fixée à 8% en poids par la spécification ASTM-D1655-21. Par ailleurs, la teneur en composés aromatiques est limitée à 25% en poids maximum dans les jets selon la spécification ASTMD1655-21a du jet A1. Une teneur trop élevée en aromatiques ainsi que l'incorporation d'aromatiques de type polyaromatiques peuvent entrainer de mauvaises propriétés de combustion.

### Art antérieur

Le brevet US 10,731,085 décrit une production de carburant renouvelable pour des applications diesel ou jet contenant des paraffines et des aromatiques. La composition est obtenue par hydroprocessing de charges biologiques suivi d'un fractionnement. La composition contient de 10 à 40% en masse de cycloalcanes en C8-C30. La composition peut être utilisée en mélange avec un carburéacteur issu de charge fossile.

Le brevet US 2009/0253947 décrit un procédé de production, en particulier un procédé de production intégré, d'un mélange de carburant à partir d'un composant riche en paraffines et d'un composant riche en composés cycliques, chacun des composants étant généré à partir d'une matière première renouvelable.

Le brevet EP3292187 décrit un composé aromatique utilisé dans un mélange comprenant un kérosène d'origine pétrolière et un biokérosène.

Le brevet FR3041360 décrit un mélange d'un kérosène qui peut être un kérosène paraffinique synthétique (SPK-HEFA ou SPK -FT) ou iso paraffine synthétique (SIP) et d'un ou plusieurs composés aromatiques qui peuvent être seuls ou en mélange. Les composés aromatiques décrits sont du benzène substitué et/ou la tétraline (C10H12) et/ou la décaline (C10H16). La teneur en benzène substitué par n méthyles, n étant un entier compris entre 1 et 6, étant comprise entre 2 et 15% en volume par rapport au volume total de la composition.

Aucune de ces compositions ne permet d'optimiser la teneur et le type de composés aromatiques dans la composition finale de carburéacteur afin d'améliorer la qualité de combustion tout en assurant une bonne compatibilité avec les systèmes existants.

Il existe donc un réel besoin d'un nouveau carburant issu exclusivement de charges renouvelables, en particulier un carburéacteur dont la teneur en aromatiques et principalement en monoaromatiques est optimisée grâce à l'incorporation d'une base aromatique en mélange avec une base principalement paraffinique.

### Description de l'invention

L'invention vise à fournir une composition dont la teneur en aromatiques et la nature desdits aromatiques sont optimisées. En effet, une teneur en aromatiques optimisée permet d'ajuster le blending, en particulier pour atteindre la spécification en aromatiques sans introduire d'excès d'aromatiques comme c'est le cas pour les jets fossiles. Plus encore, l'optimisation permet de contrôler la nature des aromatiques et d'incorporer principalement des monoaromatiques permettant d'améliorer les propriétés de combustion.

A cet effet, l'invention concerne une composition de carburéacteur issue de charges renouvelables comprenant :
a) de 70% à 95% en masse d'au moins une base paraffinique issue d'un hydrotraitement d'esters et d'acides gras ou d'un procédé Fischer-Tropsch et comprenant au moins 90% en masse de paraffines,
b) de 5 à 30% en masse d'au moins une base aromatique en C8-C16 caractérisée en ce que ladite base aromatique correspond à la fraction C8-C16 d'un biocarburant en C6-C20 produit par un procédé de conversion en carburant d'au moins un bioalcool en C2 et caractérisée en ce que ladite base aromatique contient au moins 60% en masse de composés aromatiques lesdits composés aromatiques comprenant au moins 50% en masse de benzène substitué par au moins n alkyle en C2-C5, n étant un entier de 1 à 3,
dans laquelle ladite composition de carburéacteur comprend moins de 9,5% en masse de cycloalcanes en C6-C16.

Avantageusement, la composition de carburéacteur comprend de 70% à 80% en masse de l'au moins une base paraffinique a), de préférence de 80% à 85%, préférentiellement de 85% à 92% en masse, encore plus préférentiellement de 92% à 95% en masse.

Avantageusement, la composition de carburéacteur comprend de 20% à 30% en masse de l'au moins une base aromatique b), de préférence de 15% à 20% en masse, préférentiellement de 8% à 15% en masse, encore plus préférentiellement de 5 à 8% en masse.

Avantageusement, l'au moins une base aromatique selon b) contient au moins 70% en masse de composés aromatiques, de préférence au moins 80% en masse de composés aromatiques, préférentiellement au moins 90% en masse de composés aromatiques. En particulier, ces composés aromatiques sont des composés monoaromatiques.

Avantageusement, l'au moins une base paraffinique a) est produite à partir d'une ou plusieurs huiles choisies parmi les huiles végétales, les graisses animales, préférentiellement les huiles hautement saturées non comestibles, les huiles usagées, les sous-produits du raffinage des huiles végétales ou d'huile(s) animale(s) contenant des acides gras libres, des tallols, et des huiles produites par des bactéries, levures, algues, procaryotes ou eucaryotes.

L'invention concerne également un procédé de production d'une composition de carburéacteur issue de charges renouvelables comprenant au moins les étapes suivantes :
a) La production d'au moins une base paraffinique à partir d'un hydrotraitement d'esters et d'acides gras ou d'un procédé Fischer-Tropsch, ladite au moins une base paraffinique comprenant au moins 90% en masse de paraffines
b) La production d'au moins une base aromatique en C8-C16 comprenant au moins les étapes suivantes :
   i) la production d'un biocarburant en C6-C20 par un procédé de conversion en carburant de bioéthanol seul ou en mélange avec d'autres bioalcools en C1-C6,
   ii) la récupération de ladite base aromatique en C8-C16 par fractionnement dudit biocarburant obtenu à l'étape i),
   ladite base aromatique en C8-C16 comprenant au moins 60 % de composés aromatiques lesdits composés aromatiques comprenant au moins 50% en masse de benzène substitué par au moins n alkyle en C2-C5, n étant un entier de 1 à 3,
c) Le mélange de 70% à 95% en masse de l'au moins une base paraffinique produite à l'étape a) avec 5 à 30% en masse de l'au moins une base aromatique produite à l'étape b) pour obtenir une composition de carburéacteur contenant moins de 9,5% en masse de cycloalcanes en C6-C16.

Avantageusement, l'au moins une base paraffinique issue de l'étape a) est produite à partir d'une ou plusieurs huiles choisies parmi les huiles végétales, les graisses animales, préférentiellement les huiles hautement saturées non comestibles, les huiles usagées, les sous-produits du raffinage des huiles végétales ou d'huile(s) animale(s) contenant des acides gras libres, des tallols, et des huiles produites par des bactéries, levures, algues, procaryotes ou eucaryotes.

Avantageusement, l'étape c) comprend le mélange de 70% à 80% en masse de l'au moins une base paraffinique produite à l'étape a) avec 20% à 30% en masse de l'au moins une base aromatique produite à l'étape b).

Alternativement, l'étape c) comprend le mélange de 80% à 85% en masse de l'au moins une base paraffinique produite à l'étape a) avec 20% à 15% en masse de l'au moins une base aromatique produite à l'étape b).

Alternativement, l'étape c) comprend le mélange de 85% à 92% en masse de l'au moins une base paraffinique produite à l'étape a) avec 15% à 8% en masse de l'au moins une base aromatique produite à l'étape b).

Alternativement, l'étape c) comprend le mélange de 92% à 95% en masse de l'au moins une base paraffinique produite à l'étape a) avec 5% à 8% en masse de l'au moins une base aromatique produite à l'étape b).

Les étapes a), b) et c) peuvent être opérées dans des procédés distincts.

### Description détaillée de l'invention

Les termes « comprenant » et « comprend » tels qu'utilisés ici sont synonymes avec « incluant », « inclut » ou « contient », « contenant », et sont inclusifs ou sans bornes et n'excluent pas de caractéristiques additionnelles, d'éléments ou d'étapes de méthodes non spécifiés.

Les expressions % en poids et % en masse ont une signification équivalente et se réfèrent à la proportion de la masse d'un produit rapportée à 100g d'une composition le comprenant.

### Base paraffinique selon l'invention

On entend par base paraffinique un carburant synthétique paraffinique produit à partir de matière première d'origine non pétrolière compatible avec la spécification ASTM D7566:2021 et contenant au moins 95% en masse de composés paraffiniques.

Ledit carburant synthétique paraffinique est avantageusement un kérosène paraffinique synthétique (SPK) issu d'un hydrotraitement d'esters et d'acides gras (SPK-HEFA) ou issu d'un procédé Fischer Tropsch (SPK-FT).

Le carburant synthétique paraffinique de la présente invention est ainsi un carburant renouvelable obtenu exclusivement à partir de composés d'origine non fossile.

Le carburant synthétique paraffinique renouvelable SPK-HEFA peut être produit à partir d'huile(s) d'origine naturelle par un procédé d'hydrogénation et de désoxygénation d'esters d'acides gras et d'acides gras libres et du traitement ultérieur du produit comprenant l'hydrocraquage, ou l'hydroisomérisation, ou l'isomérisation, ou une combinaison de ces étapes, et peut inclure d'autres procédés de raffinage conventionnels. En d'autres termes, le carburant synthétique paraffinique renouvelable SPK-HEFA est produit à partir de l'hydrotraitement d'esters et d'acides gras d'une huile d'origine naturelle.

Une huile d'origine naturelle est définie comme une huile d'origine biomasse et ne contenant aucune huile minérale. Dans la description « huile(s) d'origine naturelle » désigne indifféremment les huiles, les graisses et leurs mélanges.

La ou lesdites huiles d'origine naturelle peuvent contenir une ou plusieurs huiles choisies parmi les huiles végétales, les graisses animales, préférentiellement les huiles hautement saturées non comestibles, les huiles usagées, les sous-produits du raffinage d'huile(s) végétale(s) ou d'huile(s) animale(s) contenant les acides gras libres, les tallols et les huiles produites par des bactéries, des levures, des algues, des procaryotes ou des eucaryotes.

Les huiles végétales appropriées sont par exemple l'huile de palme, l'huile de palmiste, l'huile de soja, l'huile de colza (colza ou canola), l'huile de tournesol, l'huile de lin, l'huile de son, l'huile de riz, l'huile de maïs, l'huile d'olive, l'huile de ricin, l'huile de sésame, l'huile de pin, l'huile d'arachide, l'huile de moutarde, l'huile de carinata, l'huile de chanvre, l'huile de noix de coco, l'huile de babasu, l'huile de coton, l'huile de linola, l'huile de jatropha.

Les graisses animales comprennent le suif, le saindoux, la graisse (graisse jaune et brune), l'huile/la graisse de poisson, la matière grasse, les graisses de lait.

Les sous-produits du raffinage des huiles végétales ou animales sont des sous-produits contenant des acides gras libres qui sont éliminés des graisses et huiles brutes par neutralisation ou distillation sous vide ou à la vapeur. Un exemple typique est le PFAD (Palm Fatty Acid Distillate).

Les huiles usagées comprennent les huiles de cuisson usagées (huiles alimentaires usagées) et les huiles récupérées à partir des eaux résiduelles, telles que les graisses/huiles de vidange, les huiles de gouttière, les huiles d'égout, par exemple des stations d'épuration des eaux, et les graisses usagées de l'industrie alimentaire.

Les tall oil, y compris les tall oil bruts, les tall oil distillés (DTO) et les acides gras de tall oil (TOFA), de préférence le DTO et le TOFA, peuvent également être utilisés dans la présente invention.

Le tall oil, ou autrement appelé tallol, est un sous-produit liquide du procédé Kraft de transformation du bois, permettant d'isoler d'une part la pâte de bois utile à l'industrie papetière. Le tall oil est essentiellement obtenu lorsque les conifères sont utilisés dans le procédé Kraft. Après traitement des copeaux de bois avec du sulfure de sodium en solution aqueuse, le tall oil isolé est alcalin. Ce dernier est ensuite acidifié avec de l'acide sulfurique pour produire du tall oil brut.

La ou les huiles d'origine naturelle utilisées dans la présente invention comprennent également des huiles produites par des micro-organismes, soit des micro-organismes naturels soit des micro-organismes génétiquement modifiés, tels que des bactéries, des levures, des algues, des procaryotes ou des eucaryotes. En particulier de telles huiles peuvent être récupérées par des méthodes d'extraction mécanique ou chimique bien connues.

Le carburant synthétique paraffinique renouvelable SPK-FT est issu d'un procédé de Fischer Tropsch et peut être produit à partir de biomasse solide. La conversion thermochimique de la biomasse (gazéification et synthèse Fisher-Tropsch), aussi appelée BtL (Biomass to Liquid), comprend les étapes suivantes : conditionnement de la biomasse (préparation, trituration, torréfaction), gazéification de la biomasse (obtention d'un gaz de synthèse), purification du gaz de synthèse, synthèse Fisher-Tropsch pour transformer le gaz en biocarburant de synthèse.

Quel que soit le procédé précité utilisé, le carburant synthétique paraffinique peut avoir été soumis à une étape de distillation avant son incorporation dans la composition de l'invention, afin d'éliminer les paraffines les plus lourdes qui ne permettraient pas de respecter les propriétés à froid du jet, en particulier le point de disparition des cristaux qui doit être inférieur à -47°C pour le Jet A1. Les composés les plus légers peuvent également être séparés par distillation, afin de respecter, notamment, les propriétés de volatilité et du point éclair du jet A1.

Quel que soit le procédé précité utilisé, le carburant synthétique paraffinique renouvelable peut présenter une ou plusieurs des caractéristiques suivantes :
- une teneur en paraffines supérieure à 90% en masse,
- une teneur en cycloparaffines inférieure à 10 % en masse,
- un point de congélation inférieur à -30°C, de préférence inférieur à -40°C, par exemple inférieur à -47°C,
- une densité à 15°C comprise entre 730 et 780kg/m³,
- un intervalle de distillation de 145°C à 315°C,
- une teneur en isoparaffines de 70 % en masse ou plus,.

### Base aromatique selon l'invention

La base aromatique en C8-C16 peut être produite selon les étapes suivantes :
i) production d'un biocarburant en C6-C20 en soumettant du bioéthanol issu d'au moins une charge renouvelable à un procédé de conversion d'alcool en carburant
ii) récupération par fractionnement de ladite base aromatique en C8-C16 issue dudit biocarburant obtenu à l'étape i)

### Etape i) : production d'un biocarburant en C6-C20

La production du biocarburant selon l'étape i) peut être obtenue par conversion de bioéthanol seul ou en mélange avec d'autres bioalcools en C1-C6, dans un procédé catalytique. Le procédé catalytique peut être réalisé sur un lit d'aluminosilicate de préférence de type zéolithe.

Le bioethanol peut être produit à partir de la fermentation éthanolique par l'action fermentaire de micro-organismes, de levures et/ou de bactéries d'au moins une matière première d'origine végétale

Un mode d'obtention du biocarburant en C6-C20 est décrit par exemple dans le brevet EP2940103 d'Ekobenz.

### Etape ii) : récupération de la base aromatique en C8-C16

Le biocarburant en C6-C20 obtenu lors de l'étape i) est fractionné pour récupérer la fraction C8-C16 afin de satisfaire aux propriétés de volatilité des carburants aviation.

La base aromatique en C8-C16 selon l'invention peut présenter une ou plusieurs des caractéristiques suivantes :
- au moins 60 % en masse de composés aromatiques en C8-C16, notamment de composés monoaromatiques, lesdits composés aromatiques comprenant au moins 50% en masse de benzène substitué par au moins n alkyle en C2-C5, n étant un entier de 1 à 3,
- de 8% en masse à 15% en masse de naphtènes,
- de 5% en masse à 15% en masse d'isoparaffines,
- moins de 5% en masse de n-paraffines

On notera que lesdits composés aromatiques présents en une teneur d'au moins 60% en masse comprennent du benzène substitué par au moins n alkyle en C2-C5. Ces composés aromatiques peuvent ainsi comprendre un mélange de molécules de benzène substitué par au moins n alkyle en C2-C5, et optionnellement des molécules de benzène substitué par au moins n alkyle en C2-C5 et par m méthyle, m étant un entier de 1 à 3.

En particulier, la production des bases paraffiniques et aromatiques selon l'invention peut être réalisée à partir de sources renouvelables différentes, et notamment par des procédés séparés.

### Mélange selon l'invention

Avantageusement, la composition de carburéacteur selon l'invention peut être conforme aux exigences Jet A ou Jet A1 telles que définies dans la norme ASTM D7566 :2021 de juillet 2021 ou dans la DefStan 91-091 Issue 11 qui fait référence à la norme ASTM D7566:21. En particulier, les teneurs en base parafinique a) et en base aromatique b) dans la composition de carburéacteur selon l'invention peuvent être choisies de telle sorte que la composition de carburéacteur selon l'invention soit conforme à ces exigences.

Dans un mode de réalisation avantageux, l'au moins une base paraffinique a) et l'au moins une base aromatique b) sont issues de traitements séparés de charges renouvelables (de procédés distincts), notamment de charges renouvelables distinctes.

Dans un mode de réalisation préféré, la composition de carburéacteur selon l'invention est constituée des bases paraffiniques a) et aromatiques b) issues de charges renouvelables. Notamment, la composition de carburéacteur selon l'invention est exempte de composants d'origine pétrolière.

### Description des figures

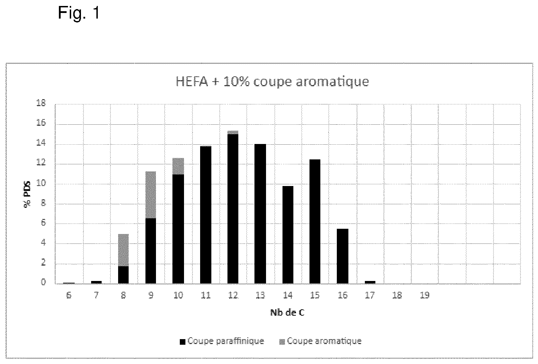

Fig. 1: Répartition des hydrocarbures dans le mélange selon l'exemple 1.

L'exemple ci-dessous illustre l'invention sans pour autant en limiter la portée.

### Exemple

Un mélange selon l'invention est préparé. Le mélange contient 90% en masse d'HEFA conforme à la base paraffinique a) selon l'invention et 10% en masse de la base aromatique b).

D'autres additifs peuvent être ajoutés à la composition de telle sorte que la composition de carburéacteur selon l'invention soit conforme aux exigences de la norme ASTM D7566:2020.

L'ajout de la base aromatique b) permet d'obtenir une composition dans laquelle la teneur en C8-C12 est augmentée comme représenté sur la figure 1.

Par rapport à un jet fossile, la composition selon l'invention a une faible teneur en hydrocarbures aromatiques polycycliques. Aussi, la quantité d'hydrocarbures monoaromatiques par rapport à la quantité totale d'hydrocarbures aromatiques est plus élevée pour la présente composition que pour le jet fossile. La composition est ainsi utile pour réduire la teneur en hydrocarbures polyaromatiques d'un carburant et augmenter la proportion d'hydrocarbures monoaromatiques. Des avantages sont obtenus en termes d'amélioration de la combustion avec une amélioration du point de fumée et une diminution des émissions de suie.

## Revendications

1. Composition de carburéacteur issue de charges renouvelables comprenant :
a. de 70% à 95% en masse d'au moins une base paraffinique issue d'un hydrotraitement d'esters et d'acides gras ou d'un procédé Fischer-Tropsch et comprenant au moins 90% en masse de paraffines,
b. de 5 à 30% en masse d'au moins une base aromatique en C8-C16 **caractérisée en ce que** ladite base aromatique correspond à la fraction C8-C16 d'un biocarburant en C6-C20 produit par un procédé de conversion en carburant d'au moins un bioalcool en C2 et **caractérisée en ce que** ladite base aromatique contient au moins 60% en masse de composés aromatiques, lesdits composés aromatiques comprenant au moins 50% en masse de benzène substitué par au moins n alkyle en C2-C5, n étant un entier de 1 à 3,
dans laquelle ladite composition de carburéacteur comprend moins de 9,5% en masse de cycloalcanes en C6-C16.

2. Composition de carburéacteur selon la revendication 1 comprenant de 70% à 80% en masse de l'au moins une base paraffinique a), de préférence de 80% à 85% en masse de l'au moins une base paraffinique a), préférentiellement de 85% à 92% en masse de l'au moins une base paraffinique a), encore plus préférentiellement de 92% à 95% en masse.

3. Composition de carburéacteur selon les revendications 1 et 2 comprenant de 20% à 30% en masse de l'au moins une base aromatique b), de préférence de 15% à 20% en masse de l'au moins une base aromatique b), préférentiellement de 8% à 15% en masse de l'au moins une base aromatique b), encore plus préférentiellement de 5% à 8% en masse.

4. Composition de carburéacteur selon l'une des revendications 1 à 3 **caractérisée en ce que** la base aromatique selon b) contient au moins 70% en masse de composé aromatiques, de préférence au moins 80% en masse de composés d'aromatiques, préférentiellement au moins 90% en masse de composés aromatiques.

5. Composition de carburéacteur selon l'une des revendications 1 à 4 **caractérisée en ce que** l'au moins une base paraffinique a) est produite à partir d'une ou plusieurs huiles choisies parmi les huiles végétales, les graisses animales, préférentiellement les huiles hautement saturées non comestibles, les huiles usagées, les sous-produits du raffinage des huiles végétales ou d'huile(s) animale(s) contenant des acides gras libres, des tallols, et des huiles produites par des bactéries, levures, algues, procaryotes ou eucaryotes.

6. Procédé de production d'une composition de carburéacteur issue de charges renouvelables comprenant au moins les étapes suivantes :
a) La production d'au moins une base paraffinique à partir d'un hydrotraitement d'esters et d'acides gras ou d'un procédé Fischer-Tropsch, ladite au moins une base paraffinique comprenant au moins 90% en masse de paraffines
b) La production d'au moins une base aromatique en C8-C16 comprenant au moins les étapes suivantes :
i) la production d'un biocarburant en C6-C20 par un procédé de conversion en carburant de bioéthanol seul ou en mélange avec d'autres bioalcools en C1-C6,
ii) la récupération de ladite base aromatique en C8-C16 par fractionnement dudit biocarburant obtenu à l'étape i), ladite base aromatique en C8-C16 comprenant au moins 60 % en masse de composés aromatiques, lesdits composés aromatiques comprenant au moins 50% en masse de benzène substitué par au moins n alkyle en C2-C5, n étant un entier de 1 à 3,
c) Le mélange de 70% à 95% en masse de l'au moins une base paraffinique produite à l'étape a) avec 5 à 30% en masse de l'au moins une base aromatique produite à l'étape b) pour obtenir une composition de carburéacteur contenant moins de 9,5% en masse de cycloalcanes en C6-C16.

7. Procédé de production d'une composition de carburéacteur issue de charges renouvelables selon la revendication 6 **caractérisée en ce que** l'au moins une base paraffinique issue de l'étape a) est produite à partir d'une ou plusieurs huiles choisies parmi les huiles végétales, les graisses animales, préférentiellement les huiles hautement saturées non comestibles, les huiles usagées, les sous-produits du raffinage des huiles végétales ou d'huile(s) animale(s) contenant des acides gras libres, des tallols, et des huiles produites par des bactéries, levures, algues, procaryotes ou eucaryotes.

8. Procédé de production d'une composition de carburéacteur issue de charges renouvelables selon les revendications 6 et 7 **caractérisée en ce que** le mélange de l'étape c) comprend le mélange de 70% à 80% en masse de l'au moins une base paraffinique produite à l'étape a) avec 20% à 30% en masse de l'au moins une base aromatique produite à l'étape b), de préférence, l'étape c) comprend le mélange de 80% à 85% en masse de l'au moins une base paraffinique produite à l'étape a) avec 20% à 15% en masse de l'au moins une base aromatique produite à l'étape b), préférentiellement, l'étape c) comprend le mélange de 85% à 92% en masse de l'au moins une base paraffinique produite à l'étape a) avec 15% à 8% en masse de l'au moins une base aromatique produite à l'étape b), encore plus préférentiellement, l'étape c) comprend le mélange de 92% à 95% en masse de l'au moins une base paraffinique produite à l'étape a) avec 5% à 8% en masse de l'au moins une base aromatique produite à l'étape b).

9. Procédé de production d'une composition de carburéacteur selon les revendications 6 à 8 **caractérisé en ce que** les étapes a), b) et c) sont opérées dans des procédés distincts.
